(19) Europäisches Patentamt
European Patent Office
Office européen des brevets

(11) Veröffentlichungsnummer: **0 099 556**
**B1**

(12) # EUROPÄISCHE PATENTSCHRIFT

(45) Veröffentlichungstag der Patentschrift: **04.06.86**

(51) Int. Cl.⁴: **B 23 Q 41/00**

(21) Anmeldenummer: **83106951.3**

(22) Anmeldetag: **15.07.83**

(54) **Quertransporteinrichtung mit Vorrichtungsträger für verkettete Transferanlagen.**

(30) Priorität: **22.07.82 DE 3227352**

(43) Veröffentlichungstag der Anmeldung: **01.02.84 Patentblatt 84/5**

(45) Bekanntmachung des Hinweises auf die Patenterteilung: **04.06.86 Patentblatt 86/23**

(84) Benannte Vertragsstaaten: **AT CH FR GB IT LI LU SE**

(56) Entgegenhaltungen:
**US - A - 2 120 966**
**US - A - 3 061 064**
**US - A - 3 075 651**

(73) Patentinhaber: **Gebr. Felss GmbH & Co. KG., Dieselstrasse 2, D-7535 Königsbach-Stein 2 (DE)**

(72) Erfinder: **Kienhöfer, Klaus, Dipl.-Ing., Öschelbronner Weg 19, D-7532 Niefern-Öschelbronn 1 (DE)**
Erfinder: **Binhack, Fritz, Zum kleinen Feld 2, D-7518 Bretten-Ruit (DE)**

(74) Vertreter: **Hubbuch, Helmut, Dipl.-Ing et al, Patentanwälte Dr. Rudolf Bauer Dipl.-Ing. Helmut Hubbuch Dipl.-Phys. Ulrich Twelmeier Westliche Karl-Friedrich-Strasse 29-31, D-7530 Pforzheim (DE)**

**EP 0 099 556 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Quertransporteinrichtung mit Vorrichtungsträger für verkettete Transferanlagen mit einzelnen Bearbeitungsstationen, wie Dreh- und Hämmermaschinen mit jeweils zugehörigen Vorschubaggregaten.

Solche Quertransporteinrichtungen verketten verschiedene Bearbeitungsstationen, welche aus Dreh-, Hämmermaschinen und dgl. spanlos und spanabhebenden Bearbeitungsmaschinen gegebenenfalls mit gegenüberliegenden Vorschubaggregaten bestehen und welche zwischen diesen Bearbeitungs- und Vorschubvorrichtungen die Werkstücke weiterfördern. Der Vorrichtungsträger (z. B. Tragbalken) für die Quertransporteinrichtungen kann auch Spann- und Wendestationen sowie Zwischenablagen und dgl. aufnehmen. Eine solche Anordnung ist bei Wartungsarbeiten und Werkzeugwechsel störend im Wege, insbesondere wenn es sich bei grossen Bearbeitungsmaschinen auch um schwere Werkzeuge und Wechselteile handelt.

Es ist Aufgabe der Erfindung, bei verketteten Transferanlagen die Bearbeitungsmaschinen und gegebenenfalls Vorschubaggregate zur Wartung und Werkzeugwechsel besser zugänglich und unfall- und beschädigungssicherer zu machen.

Die Quertransporteinrichtung mit Vorrichtungsträger für verkettete Transferanlagen mit einzelnen Bearbeitungsstationen, wie Dreh- und Hämmermaschinen mit jeweils zugehörigen Vorschubaggregaten nach der Erfindung kennzeichnet sich hierzu dadurch, dass der als Tragbalken ausgebildete Vorrichtungsträger für den Quertransport hydraulisch, pneumatisch oder elektromotorisch anhebe- und absenkbar angeordnet ist, um Wartungsarbeiten oder Werkzeugwechsel an den Bearbeitungsstationen zu erleichtern.

Im einzelnen kann hierbei der Vorrichtungsträger (Tragbalken) für den Quertransport mittels ein oder mehreren pneumatisch oder hydraulisch betätigbaren Hubelementen, vorzugsweise zentraler Hubvorrichtung in ziehender oder schiebender Anordnung anheb- und absenkbar gelagert sein. Die Lagerung kann auch an ein oder mehreren, vorzugsweise beidseitigen Säulenführungen erfolgen, wobei der Vorrichtungsträger (Tragbalken) mittels elektromotorisch antreibbaren Gewindespindeln anheb- und absenkbar sein kann.

Schliesslich kann der Vorrichtungsträger (Tragbalken) auch mittels Ketten- oder Seilzugvorrichtung anheb- und absenkbar sein. Mit dem Vorrichtungsträger (Tragbalken) können auch Vorrichtungen, wie Spann- und Wendestationen sowie Zwischenablagen und dgl. anheb- und/oder absenkbar sein, wobei vorzugsweise eine Lagefixierung in Arbeitslage des Vorrichtungsträgers (Tragbalkens) auf Lagerböcken mit Indexierung vorgesehen ist.

Eine bevorzugte Ausführungsform einer erfindungsgemässen Quertransporteinrichtung ist beispielsweise in der Zeichnung schematisch dargestellt und nachfolgend beschrieben und zwar zeigen:

Fig. 1 eine Gesamtansicht einer Transferanlage mit einer integrierten Quertransporteinrichtung;

Fig. 2 einen Querschnitt durch diese Gesamtanlage;

Fig. 3 einen Teilschnitt durch die zugehörige Säulenführung mit Gewindespindel zur Hubverstellung und die Quertransporteinrichtung;

Fig. 4 eine vergrösserte Darstellung zum Ausschnitt A.

In der Zeichnung wird ein Vorrichtungsträger, welcher hier als Tragbalken 1 beidseits an Säulenführungen 2 mit bei 3 elektromotorisch angetriebenen Gewindespindeln 4 anheb- und absenkbar ist, gezeigt. Der Vorrichtungsträger (Tragbalken 1) dient zur Aufnahme des Quertransports für die Werkstücke zwischen den einzelnen Bearbeitungsstationen 5, wie Dreh- und Hämmermaschinen bzw. anderen spanlosen Umformstationen mit Vorschubaggregaten 6; hierzu dienen die Transportzangen 7, welche in bekannter Weise taktmässig hin- und hergehen und so die Stationen 5 verbinden. Die zwischengeschaltete Station 8 zum Gewindeschneiden und die Wendestation 9 sind auf dem Tragbalken 1 mit diesem anheb- und absenkbar angeordnet, während die Bohrstation 10 hier beispielsweise stationär angeordnet ist. Auf diese Weise werden Wartungsarbeiten und Werkzeugwechsel an den Bearbeitungsstationen bei hochgefahrenem Tragbalken 1 wesentlich erleichtert sowie Unfall- und Beschädigungsgefahr verringert.

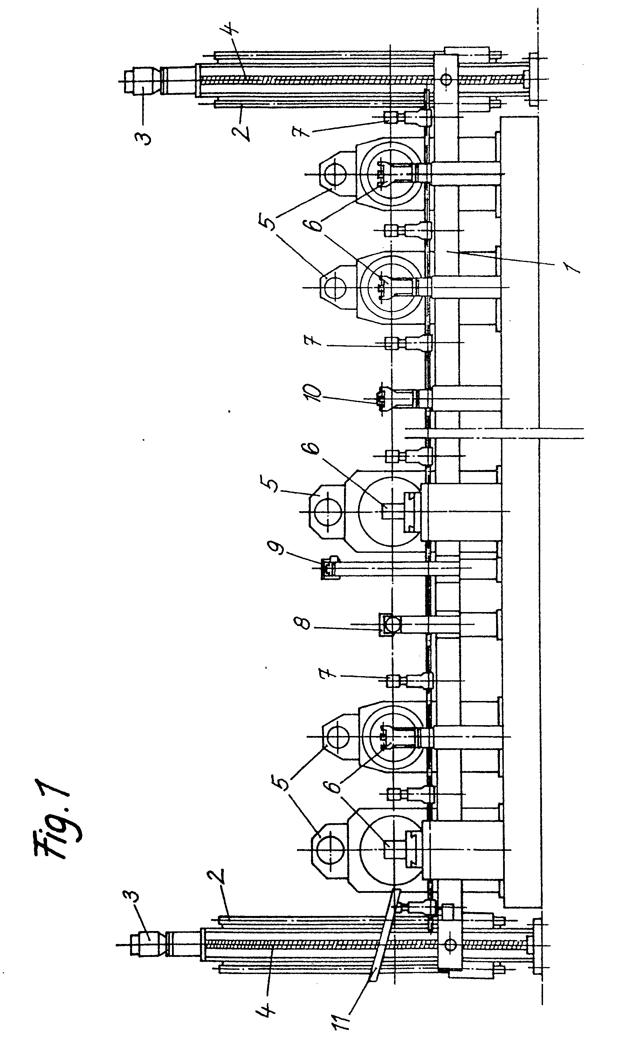

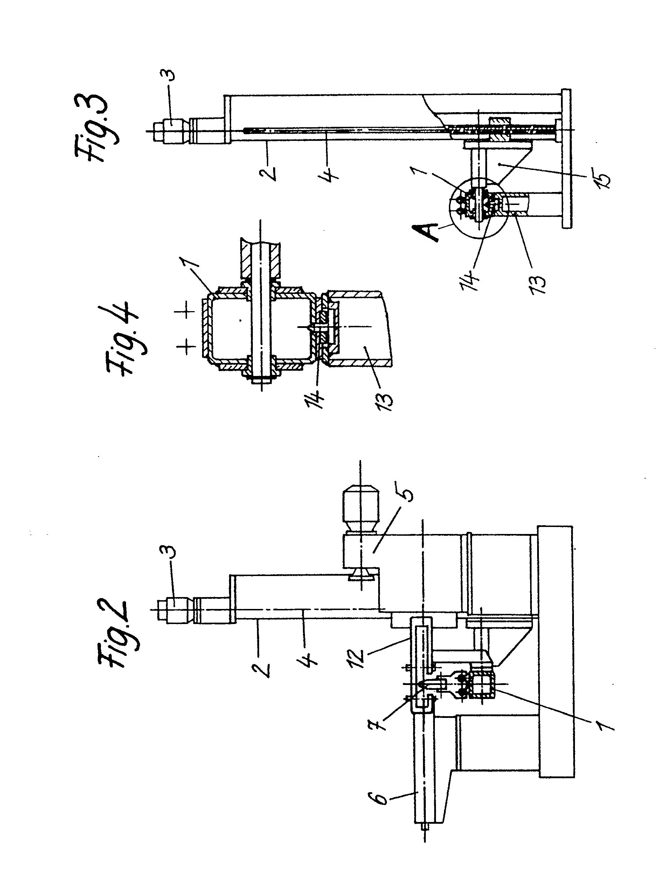

In Fig. 1 ist bei 11 noch der Einlauf angedeutet und in Fig. 2 stellt 12 eine Zwischenablage für die Werkstücke dar.

In Fig. 3 und 4 ist schliesslich die Säulenführung 2 mit Elektromotor 3 für die Gewindespindel 4 zur Hubbewegung des Tragbalkens 1 einer Seite dargestellt mit Lagerbock 13 und Indexstift 14 zur Lagefixierung des Tragbalkens 1 in seiner Arbeitslage zur Bewerkstellung des Quertransports. Die säulengeführte Tragstütze 15 dient dem Anheben und Absenken des Tragbalkens 1 in und ausser Arbeitsstellung.

**Patentansprüche**

1. Quertransporteinrichtung mit Vorrichtungsträger (1) für verkettete Transferanlagen mit einzelnen Bearbeitungsstationen (5), wie Dreh- und Hämmermaschinen mit jeweils zugehörigen Vorschubaggregaten (6), dadurch gekennzeichnet, dass der als Tragbalken ausgebildete Vorrichtungsträger für den Quertransport hydraulisch, pneumatisch oder elektromotorisch anheb- und absenkbar angeordnet ist, um Wartungsarbeiten oder Werkzeugwechsel an den Bearbeitungsstationen zu erleichtern.

2. Quertransporteinrichtung nach Anspruch 1, dadurch gekennzeichnet, dass der Vorrichtungsträger (Tragbalken) für den Quertransport mittels ein oder mehreren pneumatisch oder hydraulisch betätigbaren Hubelementen, vorzugsweise zentraler Hubvorrichtung in ziehender oder schiebender Anordnung anheb- und absenkbar gelagert ist.

3. Quertransporteinrichtung nach Anspruch 1, dadurch gekennzeichnet, dass der Vorrichtungsträger (Tragbalken) für den Quertransport an ein oder mehreren, vorzugsweise beidseitigen Säulenführungen (2) anheb- und absenkbar gelagert ist.

4. Quertransporteinrichtung nach Anspruch 1 oder 3, dadurch gekennzeichnet, dass der Vorrichtungsträger (Tragbalken) mittels elektromotorisch antreibbaren Gewindespindeln (4) anheb- und absenkbar ist.

5. Quertransporteinrichtung nach Anspruch 1, dadurch gekennzeichnet, dass der Vorrichtungsträger (Tragbalken) mittels Ketten- oder Seilzugvorrichtung anheb- und absenkbar ist.

6. Quertransporteinrichtung nach einem der vorhergehenden Ansprüche 1 bis 5, dadurch gekennzeichnet, dass mit dem Vorrichtungsträger (Tragbalken) Vorrichtungen, wie Spann- und Wendestationen (9) sowie Zwischenablagen (12) und dgl. anheb- und absenkbar sind, wobei vorzugsweise eine Lagefixierung des Vorrichtungsträgers (Tragbalkens) in Arbeitslage auf Lagerböcken (13) mit Indexierung (14) vorgesehen ist.

**Claims**

1. A transverse conveyor comprising a fixture carrier (1), for use in interconnected transfer plants including individual machining stations (5), such as lathes and swaging machines, provided with respective feed units (6), characterized in that the fixture carrier for the transverse conveyance consists of a carrying beam and is adapted to be raised and lowered by hydraulic, pneumatic or electric motor means in order to facilitate maintenance work or a change of tools at the machining stations.

2. A transverse conveyor according to claim 1, characterized in that the fixture carrier (carrying beam) for the transverse conveyance is adapted to be raised and lowered by a pulling or pushing action of one or more lifting elements, which are pneumatically or hydraulically operable and preferably constitute a central lifting mechanism.

3. A transverse conveyor according to claim 1, characterized in that the fixture carrier (carrying beam) for the transverse conveyance is movably mounted on one or more guide columns (2), which are preferably disposed on opposite sides and permit the fixture carrier to be raised and lowered.

4. A transverse conveyor according to claim 1 or 3, characterized in that the fixture carrier (carrying beam) is adapted to be raised and lowered by means of screws (4) which are adapted to be driven by electric motor means.

5. A transverse conveyor according to claim 1, characterized in that the fixture carrier (carrying beam) is adapted to be raised and lowered by means of a tension chain or tension rope.

6. A transverse conveyor according to any of the preceding claims 1 to 5, characterized in that fixtures, such as chucking and reversing stations (9) and intermediate supports (12) and the like are adapted to be raised and lowered with the fixture carrier, and means are preferably provided for fixing the fixture carrier (carrying beam) in operative position on bearing brackets (13) provided with detent means (14).

**Revendications**

1. Dispositif de transport transversal avec support de dispositif (1) pour installationstransfert interconnectées avec postes d'usinage individuels (5), tels que tours et machines à marteler avec groupes d'avance correspondants (6), caractérisé par le fait que le support de dispositif, conçu comme sommier, est prévu avec pour le transport transversal avec possibilité de levage et de descente hydraulique, pneumatique ou par moteur électrique, afin de faciliter les travaux de maintenance ou le changement des outils sur les postes d'usinage.

2. Dispositif de transport transversal d'après la revendication n° 1, caractérisé par le fait que le support de dispositif (sommier) peut être relevé et abaissé pour le transport transversal à l'aide d'un ou de plusieurs éléments de levage à actionnement pneumatique ou hydraulique, de préférence à l'aide d'un dispositif de levage central, avec mouvement de traction ou de poussée.

3. Dispositif de transport transversal d'après la revendication n° 1, caractérisé par le fait que le support de dispositif (sommier) est monté pour le transport transversal, avec possibilité de levage et de descente, sur une ou plusieurs, de préférence sur des colonnes de guidage bilatérales (2).

4. Dispositif de transport transversal d'après la revendication n° 1 ou 3, caractérisé par le fait que le support de dispositif (sommier) peut être relevé et abaissé à l'aide de colonnes à vis actionnées par un moteur électrique (4).

5. Dispositif de transport transversal d'après la revendication n° 1, caractérisé par le fait que le support de dispositif (sommier) peut être relevé et abaissé à l'aide d'un dispositif à commande par chaîne ou câble.

6. Dispositif de transport transversal d'après l'une des revendications précédentes n° 1 à 5, caractérisé par le fait que, outre le support de dispositif (sommier), des dispositifs tels que postes de serrage et de retournement (9) ainsi que des aires de dépose intermédiaires (12) et similaires peuvent être relevés et abaissés, une fixation du support de dispositif (sommier) en position de travail sur des paliers (13), avec indexation (14), étant prévue de préférence.

Fig.1
1
2
3
4
5
6
7
8
9
10
11

Fig.3
3
2
4
1
15
A
14
13
Fig.4
1
14
13
Fig.2
3
5
2
4
12
7
1
6